**Europäisches Patentamt**

**European Patent Office**

**Office européen des brevets**

(11) Veröffentlichungsnummer: **0 150 753**
**A2**

# (12) EUROPÄISCHE PATENTANMELDUNG

(21) Anmeldenummer: **85100332.7**

(22) Anmeldetag: **15.01.85**

(51) Int. Cl.⁴: **B 60 S 1/32**

---

(30) Priorität: **25.01.84 DE 3402417**

(43) Veröffentlichungstag der Anmeldung: **07.08.85**
**Patentblatt 85/32**

(84) Benannte Vertragsstaaten: **DE FR GB IT**

(71) Anmelder: **AUDI AG, Postfach 2 20, D-8070 Ingolstadt (DE)**

(72) Erfinder: **Barske, Heiko, Dr., Specklestrasse 9, D-8070 Ingolstadt (DE)**

(74) Vertreter: **Le Vrang, Klaus, AUDI NSU AUTO UNION Aktiengesellschaft Postfach 220 Patentabteilung, D-8070 Ingolstadt (DE)**

---

(54) **Wischerarm für Scheibenwischanlagen.**

(57) Um bei hohen Fahrgeschwindigkeiten die Anpresskraft von an Wischerarmen (5) befestigten Wischerblättern (27) zu erhöhen, wird vorgeschlagen, ein elektrisch beheizbares Bimetallelement (17; 37) für diesen Zweck einzusetzen. Das Bimetallelement (17) kann ganz oder teilweise den Tragbügel des Wischerarmes bilden, welcher sich dadurch beim Anlegen einer Spannung an das Bimetallelement (17) in Richtung auf die Windschutzscheibe (21) des Fahrzeuges verformt und somit die Anpresskraft des Wischerblatts (27) erhöht. Ein Bimetallelement kann auch eingesetzt werden, um die Vorspannung einer Zugfeder zwischen dem Tragbügel und einem Gelenkteil zu vergrössern und dadurch ebenfalls Einfluss auf die Anpresskraft des Wischerblatts zu nehmen.

Ingolstadt, den 17. Januar 1984
IP 1882     En/Fr

AUDI NSU AUTO UNION
Aktiengesellschaft

Wischerarm für Scheibenwischanlagen
—————————————————————————————————

Die Erfindung bezieht sich auf Wischerarme für Scheibenwischanlagen von Kraftfahrzeugen gemäß den Oberbegriffen der Ansprüche 1 und 2.

Bei mit hohen Geschwindigkeiten fahrenden Fahrzeugen vermindert sich durch Auftriebskräfte die Anpreßkraft der Wischerblätter an die Windschutzscheibe der Fahrzeuge, wodurch die Reinigungswirkung herabgestzt wird.

Um eine ausreichende Anpreßkraft der Wischerblätter in diesen Betriebszuständen sicherzustellen, sind Vorrichtungen bekannt, welche mit mechanischen, pneumatischen oder hydraulischen Mitteln Einfluß auf die Anpreßkraft nehmen. Diese Vorrichtungen sind baulich insgesamt sehr aufwendig und störanfällig, insbesondere  wenn sich Eis und Schnee im Bereich dieser Vorrichtungen ansammelt.

Aus der DE-A1-28 24 014 und der DE-C2-31 48 253 sind Vorrichtungen bekannt, welche mittels der Kraft eines Elektromagneten Einfluß auf die Anpreßkraft der Wischerblätter nehmen. Die Verwendung von Elektromagneten er-fordert entweder eine aufwendige Übertragungskinematik, wenn der Elektromagnet wie beim Gegenstand der DE-A1-28 24 014 innerhalb der Fahrzeugkarosserie angeordnet ist, oder es ist ein Abstützteil für den Elektromagneten notwendig (DE-C2-31 48 253). Das Abstützteil und insbesondere der Elektromagnet selbst erhöhen das Gewicht des Wischerarmes erheblich. Außerdem ist durch einen Elektromagneten eine feine Einstellung der Anpreßkraft in einem großen Bereich schwer zu realisieren.

Der vorliegenden Erfindung liegt die Aufgabe zugrunde, eine Vorrichtung zur Veränderung der Anpreßkraft des Wischerblattes zu schaffen, welche kostengünstig herstellbar ist, eine hohe Betriebssicherheit aufweist und mit einfachen Mitteln ein Variieren der Anpreßkraft ermöglicht.

Gemäß der Erfindung wird die Aufgabe dadurch gelöst, daß der das Wischerblatt aufnehmende Tragbügel ganz oder teilweise durch ein Bimetallelement gebildet ist, welches den Tragbügel bei am Bimetallelement angelegter elektrischer Spannung in Richtung auf die Scheibe zu verformt.

Abgesehen von einem elektrischen Anschluß ist also für die Vorrichtung zur Veränderung der Anpreßkraft des Wischerblattes kein zusätzliches Bauteil erforderlich. Es wird ein vorhandenes Teil, nämlich der Tragbügel, verwendet und entsprechend der zusätzlichen Aufgabe ganz oder teilweise als Bimetallelement ausgebildet. Dadurch werden nicht nur die Herstellkosten, sondern auch das Gewicht des Wischerarmes reduziert. Trotzdem ist eine höhere Funktionssicherheit und eine einfache Änderung der Anpreßkraft gegeben. Durch Veränderung der Stromzufuhr zum Bimetallelement kann die Anpreßkraft des Wischerblattes stufenlos und in einem weiten Bereich mit einfachen Mitteln angepaßt werden.

Die Aufgabe kann auch durch die kennzeichenden Merkmale des Anspruchs 2 gelöst werden, wenn bei einem Wischerarm die Vorspannung einer Zugfeder zwischen seinem Tragbügel und einem Gelenkteil an der Wischerwelle zur Erhöhung der Anpreßkraft des Wischerblattes vergrößert werden soll. Auch hier ermöglicht daß Bimetallelement mit einfachen Mitteln eine Anpassung der Anpreßkraft des Wischerblatts in einem weiten Bereich und bei hoher Betriebssicherheit. Das Bimetallelement kann beispielsweise durch eine gerade oder gebogene Lasche, eine Bimetallfeder oder eine Bimetalldose gebildet sein.

Bei allen Lösungen ist es möglich, die Anpreßkraft in an sich bekannter Weise abhängig von der Fahrgeschwindigkeit oder sonstigen Betriebsparametern über einen Steuerkreis selbsttätig einstellend zu gestalten.

Zwei Ausführungsbeispiele entsprechend den beiden unabhängigen Patentansprüchen sind in der Zeichnung dargestellt und werden nachfolgend näher beschrieben. Es zeigt

Fig. 1    einen Wischerarm für die Windschutzscheibe eines Kraftfahrzeuges mit einer Vorrichtung zum Verändern der Anpreßkraft des Wischerblatts,

Fig. 2    den Tragbügel des Wischerarms aus Fig. 1 in vergrößerter Darstellung und

Fig. 3    ein zweites Ausführungsbeispiel, bei dem die Anpreßkraft durch Erhöhung der

0150753

- 4 -

Vorspannung einer Zugfeder zwischen
dem Tragbügel und dem Gelenkteil
eines Wischerarmes vergrößerbar ist.

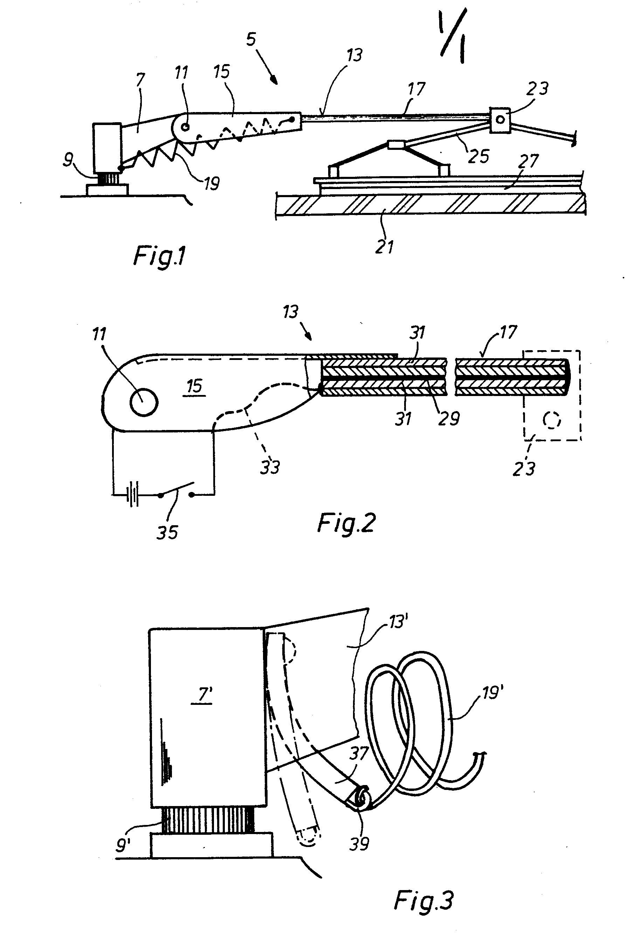

Ein in Fig. 1 dargestellter Wischerarm 5 ist durch ein
Gelenkteil 7 an einer Wischerwelle 9 befestigt. Über
ein Gelenk 11 schließt sich an das Gelenkteil 7 ein
Tragbügel 13 an. Dieser setzt sich aus einem Halter 15
und einem stabförmigen Bimetallelement 17 zusammen. Am
Halter 15 und am Gelenkteil 7 ist eine Zugfeder 19 festgelegt, welche den Wischerarm 5 gegen die Windschutzscheibe 21 eines hier nicht näher dargestellten Fahrzeuges drückt. An dem dem Halter 15 abgewandten Ende
des Bimetallelements 17 ist ein Adapter 23 befestigt,
welcher einen Wischerblattträger 25 mit einem Wischerblatt 27 aufnimmt.

In Fig. 2 ist die Vorrichtung zur Veränderung der Anpreßkraft des Wischerblattes 27 näher dargestellt. Der
wichtigste Teil dieser Vorrichtung wird durch das Bimetallelement 17 des Tragbügels 13 gebildet. Das Bimetallelement 17 besteht aus zwei übereinander angeordneten Bimetallstreifen, welche durch eine Isolierschicht 29 voneinander getrennt und nur in dem aus Kunststoff bestehenden Adapter 23 aufgenommenen Ende leitend
miteinander verbunden sind. Die einzelnen Metallstreifen
des Bimetallelements 17 sind so angeordnet, daß sich
die Metallstreifen mit dem größeren Wärmeausdehnungskoeffizienten auf der der Windschutzscheibe 21 abgewandten Seite befinden. Diese, in der Zeichnung mit 31
bezeichneten Metallstreifen, bewirken bei Stromdurchfluß durch das Bimetallelement 17 eine Krümmung desselben in Richtung auf die Windschutzscheibe 21 zu und erhöhen dadurch den Anpreßdruck des Wischerblatts 27. Zum Anlegen einer Spannung an das Bimetallelement 17 ist eine elektrische Zuleitung 33 vorgesehen. Der Rückfluß des Stromes erfolgt über den Halter 15, mit dem das Bimetallelement 17 elektrisch leitend verbunden ist. Durch einen Schalter 35 läßt sich der Stromkreis von Hand oder selbsttätig über eine geschwindigkeitsabhängige Steuerung schließen. Durch Anpassung der Stromstärke kann die Anpreßkraft gegebenenfalls variiert werden (nicht dargestellt).

Ein zweites Ausführungsbeispiel ist in Fig. 3 dargestellt. Dabei wird - mit Ausnahme des Bimetallelements 17 - von einem Wischerarm wie in Fig. 1 dargestellt, ausgegangen. Für die gleichen Bauteile werden deshalb die gleichen Bezugszeichen, jedoch mit einem Strich versehen, verwendet.

Bei dem zweiten Ausführungsbeispiel soll durch Erhöhung der Vorspannung der Zugfeder 19' die Anpreßkraft des Wischerblatts 27' erhöht werden. Für diesen Zweck ist am Gelenkteil 7' ein gekrümmter Bimetallstreifen 37 mit einer Öse 39 zur Aufnahme der Feder 19' befestigt. Wird an den Bimetallstreifen 37 eine Spannung angelegt (nicht dargestellt) so verformt sich dieser bei ausreichender Stromstärke etwa in der Weise, wie dies strichpunktiert in Fig. 3 dargestellt ist. Durch das Verformen des Bimetallstreifens 37 wird die Zugfeder 19' gelängt, wodurch sich eine größere Vorspannung ergibt, welche die Anpreßkraft des Wischerblattes 27' vergrößert.

AUDI NSU AUTO UNION
Aktiengesellschaft

Ingolstadt, den 17. Januar 1984
IP 1882    En/Fr

## Patentansprüche

1. Wischerarm (5) für Scheibenwischanlagen von Kraftfahrzeugen, mit einem auf einer Wischerwelle (9) befestigten Tragbügel (13) für ein Wischerblatt (27) und einer elektrisch betätigbaren Einrichtung zur Veränderung der Anpreßkraft des Wischerblattes (27) an die Scheibe (21), d a d u r c h   g e k e n n - z e i c h n e t,  daß der Tragbügel (13) ganz oder teilweise durch ein Bimetallelement (17) gebildet ist, welches den Tragbügel (13) bei am Bimetallelement (17) angelegter elektrischer Spannung in Richtung auf die Scheibe (21) zu verformt.

2. Wischerarm nach dem Oberbegriff des Anspruchs 1, wobei durch die Einrichtung die Vorspannung einer Zugfeder (19') zwischen dem Tragbügel (13') und einem Gelenkteil (7') an der Wischerwelle (9') vergrößerbar ist, d a d u r c h   g e k e n n z e i c h n e t, daß die Anlenkung der Zugfeder (19') am Tragbügel (13') bzw. Gelenkteil (7') unter Zwischenschaltung eines Bimetallelemtents (Bimetallstreifen 37) erfolgt, welches beim Anlegen einer elektrischen Spannung die Zugfeder (19') dehnt.

Fig.1

Fig.2

Fig.3